# EUROPÄISCHE PATENTSCHRIFT

(11) **EP 0 391 851 B1**
(45) Veröffentlichungstag und Bekanntmachung des Hinweises auf die Patenterteilung: **22.06.1994**
(21) Anmeldenummer: 90810254.4
(22) Anmeldetag: 29.03.1990
(51) Int. Cl.: A01N 25/12, A01N 59/00, A01N 43/653

(54) **Pestizide Wirkstoffkonzentrate und ihre Herstellung**
Concentrates of pesticidal active agents and their preparation
Concentrés de matières actives pesticides et leur préparation

(30) Priorität: 07.04.1989 CH 1300/89
(43) Veröffentlichungstag der Anmeldung: 10.10.1990
(73) Patentinhaber: CIBA-GEIGY AG, 4002 Basel (CH)
(72) Erfinder: Zellweger, Jean-Michel, Dr., CH-1004 Lausanne (CH)

(56) Entgegenhaltungen:
- EP-A- 0 076 340
- EP-A- 0 107 107
- EP-A- 0 203 768
- CH-A- 637 827
- DE-A- 1 617 821
- DE-A- 2 221 031
- DE-A- 3 226 534
- FR-A- 2 290 844
- GB-A- 847 370
- US-A- 4 599 233

## Beschreibung

Die vorliegende Erfindung betrifft pestizide Wirkstoffkonzentrate in Form von Brausetabletten, die einen in Wasser unlöslichen pestiziden Wirkstoff enthalten und die in Wasser zu einer spritzfähigen Suspension zerfallen, ein Brausegranulat das zur Herstellung dieser Brausetabletten geeignet ist sowie Verfahren zur Herstellung des Brausegranulats und der Brausetabletten.

Es ist bekannt, Brausetabletten herzustellen, die biologisch aktive Wirksubstanzen, wie Pharmazeutika und Pestizide, enthalten. Solche Brausetabletten enthalten üblicherweise ein Desintegriermittel, das in Berührung mit Wasser Gas entwickelt. Diese Desintegriermittel bestehen in der Regel aus einer wasserlöslichen sauren Substanz und einem Alkali-oder Erdalkalimetallcarbonat, wobei als wasserlösliche saure Substanzen insbesondere mehrbasische organische Säuren wie Bernsteinsäure, Weinsäure, Adipinsäure und Zitronensäure und als Carbonat insbesondere Natriumcarbonat und Natriumhydrogencarbonat in Betracht kommen. Am gebräuchlichsten sind Desintegrationsmittel auf der Basis von Natriumcarbonat und/oder Natriumhydrogencarbonat und Zitronensäure.

Bei der Herstellung von Brausetabletten, die einen in Wasser unlöslichen Wirkstoff enthalten, treten besondere Probleme auf, die in erster Linie darin begründet sind, dass die in Wasser unlöslichen Bestandteile der Tablette, wie Wirkstoff und unlösliche Hilfsstoffe, sehr fein gemahlen werden müssen, um nach der Zersetzung der Tablette in Wasser eine gute Schwebefähigkeit dieser Teilchen und die Bildung einer homogenen Suspension zu gewährleisten. Da sich jedoch mit abnehmender Teilchengrösse die Fliessfähigkeit einer Pulvermischung verschlechtert, treten bei der Tablettierung solcher feingemahlenen Mischungen häufig Schwierigkeiten auf, die sich mit zunehmendem Gehalt an Wirksubstanz noch vergrössern. Solche Schwierigkeiten sind beispielsweise Laminat- und Deckelbildung, schlechte Ablösbarkeit der Tabletten von der Pressform und ungleichmässige Füllung der Pressformen. Weitere Probleme werden durch den in Wasser unlöslichen Wirkstoff verursacht, insbesondere dann, wenn dieser ausgeprägte hydrophobe Eigenschaften hat. Es hat sich gezeigt, dass feingemahlene hydrophobe Wirkstoffe das üblicherweise aus Natriumcarbonat und einer sauren Substanz bestehende Desintegrationsmittel durch Anlagerung an dessen Oberfläche passivieren. Dieser Effekt ist umso stärker, je feinteiliger die Wirksubstanz ist und je höher der Wirkstoffgehalt der Tablette ist. Dies führt zu einer in der Praxis nicht mehr akzeptablen Verlängerung der Zerfallszeit der Tablette.

Eine Lösung dieses Problems durch einfachen Ersatz von Natriumcarbonat durch das als Brausekomponente aktivere Kaliumcarbonat ist nicht möglich, da Kaliumcarbonat auf Grund seiner stark hygroskopischen Eigenschaften sehr schwierig zu handhaben ist. Kaliumcarbonat neigt in starkem Masse dazu, Feuchtigkeit aus der Umgebung aufzunehmen, was zur vorzeitigen Zersetzung sowohl von Brausemischungen als auch von Brausetabletten führt. Eine Passivierung der Säure durch Reaktion mit Kaliumcarbonat an der Kristalloberfläche in Gegenwart einer definierten Menge eines polaren Lösungsmittels, wie Wasser, Methanol und Ethanol oder Gemischen dieser Lösungsmittel, wie sie in der EP-A-0 076 340 für Gemische aus Natriumcarbonat und Zitronensäure beschrieben ist, führt ebenfalls nicht zum Ziel. Auf Grund dieser Schwierigkeiten hat Kaliumcarbonat bisher bei der industriellen Herstellung von Brausetabletten kaum Verwendung gefunden.

Der vorliegenden Erfindung liegt die Aufgabe zugrunde, ein Brausegranulat auf der Basis von Kaliumcarbonat und einer festen wasserlöslichen sauren Substanz bereitzustellen, das für die Herstellung von Brausetabletten geeignet ist, die einen in Wasser unlöslichen pestiziden Wirkstoff enthalten und die in Wasser rasch unter Bildung einer spritzfähigen Suspension zerfallen.

Es wurde gefunden, dass die Empfindlichkeit von Gemischen fester saurer Substanzen mit Kaliumcarbonat gegen Feuchtigkeit ausserordentlich stark herabgesetzt werden kann wenn man diesen Gemischen 5-20 Gew.-% einer feinverteilten, zur Bindung von Wasser befähigten, in Wasser unlöslichen Substanz zusetzt.

Gegenstand der vorliegenden Erfindung ist daher ein Brausegranulat, das neben einer festen wasserlöslichen sauren Substanz und Kaliumcarbonat und/oder Kaliumhydrogencarbonat 5-20 Gew.-% einer feinverteilten, zur Bindung von Wasser befähigten, in Wasser unlöslichen Substanz enthält.

Als feste wasserlösliche saure Substanzen kommen allgemein wasserlösliche mehrbasische Säuren oder deren saure Salze in Betracht. Geeignete feste saure Substanzen sind beispielsweise Natriumhydrogensulfat, Kaliumhydrogensulfat, Natriumdihydrogenphosphat, mehrbasische Carbonsäuren oder die sauren Salze dieser mehrbasischen Carbonsäuren. Bevorzugte feste wasserlösliche saure Substanzen sind mehrbasische Carbonsäuren, wie Bernsteinsäure, Weinsäure, Adipinsäure und Zitronensäure. Besonders bevorzugt ist Zitronensäure.

Das Mengenverhältnis von Kaliumcarbonat und/oder Kaliumhydrogencarbonat und fester wasserlöslicher saurer Substanz kann in weiten Grenzen variieren. Es können sowohl Kaliumcarbonat und/oder Kaliumhydrogencarbonat als auch die feste wasserlösliche saure Substanz in einem stöchiometrischen Ueberschuss vorliegen. Beispielsweise kann das erfindungsgemässe Brausegranulat pro Aequivalent Kaliumcarbonat und/oder Kaliumhydrogencarbonat 0.5-1.5 Aequivalente feste wasserlösliche saure Substanz enthalten. Vorzugsweise enthält das erfindungsgemässe Brausegranulat pro Aequivalent Kaliumcarbonat und/oder Kaliumhydrogencarbonat 0.8-1.2 Aequivalente feste wasserlösliche saure Substanz. Besonders bevorzugt enthält das erfindungsgemässe Brausegranulat pro Aequivalent Kaliumcarbonat und/oder Kaliumhydrogencarbonat 1.0-1.2 Aequivalente feste wasserlösliche saure Substanz.

Geeignete, zur Bindung von Wasser befähigte, in Wasser unlösliche Substanzen sind beispielsweise hochdisperse Kieselsäuren, amorphe und kristalline Alumosilikate, Aluminiumoxid und Tonmineralien, oder Gemische solcher Substanzen. Besonders geeignet als zur Bindung von Wasser befähigte, in Wasser unlösliche Substanzen sind hochdisperse Kieselsäuren.

Als hochdisperse Kieselsäure kommt gefällte oder pyrogene Kieselsäure in Betracht. Besonders geeignet ist gefällte oder pyrogene Kieselsäure mit einer Grösse der Agglomerate von 5-50 »m und einer Oberfläche gemessen nach BET (vgl. J. Amer. Chem. Soc. (1938), 60, Seite 309) von 200-500 m²/g.

Geeignete amorphe Alumosilikate sind insbesondere die unter der Bezeichnung "Silica Alumina" bekannt gewordenen Substanzen. Sie können hergestellt werden, indem man einer wässrigen Lösung eines Silikats, beispielsweise Natriumsilikat, eine wässrige Lösung eines Aluminiumsalzes, beisielsweise Aluminiumsulfat, zusetzt, den gebildeten Niederschlag filtriert, mit Wasser auswäscht und calciniert. Ein weiteres Herstellungsverfahren besteht darin, dass man aus einer wässrigen Lösung von Natriumsilikat durch Zugabe von Schwefelsäure Kieselgel ausfällt und diesem nach einer gewissen Alterungszeit Aluminiumsulfat und Ammoniak zusetzt, wobei der pH-Wert im schwach sauren Bereich gehalten wird. Danach wird der Niederschlag filtriert, gewaschen und calciniert. Bezüglich der Herstellung amorpher Alumosilikate sei ferner auf die U.S. Patentschriften 2,283,172 und 2,283,173 verwiesen. Nähere Erläuterungen zur Struktur von "Silica Alumina" finden sich in Ind. Eng. Chem. 41, (1949), 2564-2573. Erfindungsgemäss verwendbare amorphe Aluminosilikate enthalten 5-30 Gew.-% aus Al₂O₃ und 70-95 Gew.-% SiO₂. Sie haben eine innere Oberfläche gemessen nach BET von 50-800 m²/g und ein Porenvolumen von 0,1-3 cm³/g. Die Teilchengrösse kann 5-50 »m, vorzugsweise 8-25 »m betragen.

Als kristalline Alumosilikate kommen insbesondere natürliche und synthetisch hergestellte Zeolithe in Betracht, die auf eine Teilchengrösse von 5-50 »m, vorzugsweise 8-25 »m gemahlen sind.

Geeignete Aluminiumoxide sind insbesondere Tonerden, wie sie zur Säulenchromatographie verwendet werden. Als Tonmineralien kommen insbesondere Bentonit, Montmorillonit und Bauxit in Frage. Der Wassergehalt der unlöslichen zur Bindung von Wasser befähigten Substanz beträgt vorteilhaft weniger als 5 Gew.-%. Vorzugsweise beträgt der Wassergehalt der unlöslichen zur Bindung von Wasser befähigten Substanz weniger als 3 Gew.-%.

Vorzugsweise beträgt der Gehalt des erfindungsgemässen Brausegranulats an in Wasser unlöslicher, zur Bindung von Wasser befähigter Substanz 5-20 Gew.-% und besonders bevorzugt 5-10 Gew.-%.

Das erfindungsgemässe Brausegranulat wird hergestellt, indem man 80-95 Gewichtsteilen einer aus einer festen wasserlöslichen sauren Substanz und Kaliumcarbonat und/oder Kaliumhydrogencarbonat bestehenden Mischung 5-20 Gewichtsteile einer fein verteilten zur Bindung von Wasser befähigten, in Wasser unlöslichen Substanz zusetzt, die erhaltene Mischung mit 25-50 Gewichtsteilen eines C₁-C₆Alkanols zu einer Paste verrührt, anschliessend das Alkanol im Vakuum entfernt und den Rückstand granuliert.

Unter den C₁-C₆Alkanolen sind C₃-C₄Alkanole bevorzugt. Besonders bevorzugte Alkanole sind Isopropanol und Isobutanol. Die Alkanole werden vorzugsweise in Mengen von 30-40 Gewichtsteilen verwendet. Die Entfernung des Alkanols kann bei Drucken im Bereich von 0,02-0,1 bar vorgenommen werden. Vorzugsweise erfolgt die Entfernung des Alkanols bei Drucken im Bereich von 0,02-0,05 bar. Die Entfernung des Alkanols kann im Temperaturbereich von 40-80°C vorgenommen werden. Vorzugsweise wird das Alkanol bei einer Temperatur von 50-70°C entfernt.

Zur Granulierung wird der nach Entfernung des Alkanols erhaltene Rückstand gemahlen und durch ein Sieb mit einer Maschenweite von 0,5-1 mm gesiebt. Das so erhaltene Granulat kann ohne weitere Vorbehandlung zur Herstellung von Brausetabletten verwendet werden. Es kann aber auch monatelang in geschlossenen Behältern gelagert werden, ohne dass Zersetzung eintritt. Das erfindungsgemässe Brausegranulat ist jedoch auch an der Luft relativ stabil, was eine Handhabung wesentlich vereinfacht. So kann es mehrere Stunden bei Raumtemperatur in Berührung mit Luft mit einer relativen Feuchtigkeit von bis zu 40 % gelagert werden, ohne dass eine Veränderung festgestellt werden kann.

Zur Herstellung von Brausetabletten wird das erfindungsgemässe Brausegranulat mit einer feingemahlenen Mischung der Wirksubstanz und der übrigen Hilfsstoffe, wie oberflächenaktive Mittel, Füllstoffe und Bindemittel, Schmiermittel, die das Ausbringen der Tablette aus der Pressform erleichtern, und Fliessreguliermittel, zu einer direkt tablettierbaren Mischung (Feedstock) vermischt und diese Mischung mit üblichen Tablettiervorrichtungen tablettiert. Mit dem erfindungsgemässen Brausegranulat können Brausetabletten hergestellt werden, die bei guter mechanischer Festigkeit in Wasser sehr rasch unter Bildung einer spritzfähigen Suspension zerfallen. Der besondere Vorteil des erfindungsgemässen Brausegranulats besteht darin, dass es den raschen Zerfall der Brausetablette in Wasser auch dann gewährleistet, wenn die Brausetablette stark hydrophobe Wirksubstanzen in hoher Konzentration enthält.

Die unter Verwendung des erfindungsgemässen Brausegranulats hergestellten Brausetabletten stellen ein leicht herstellbares und leicht zu handhabendes pestizides Wirkstoffkonzentrat dar das ebenfalls von vorliegender Erfindung umfasst wird.

Ein weiterer Gegenstand der vorliegenden Erfindung ist daher ein pestizides Wirkstoffkonzentrat in Form von Brausetabletten, das in Wasser unter Bildung einer spritzfähigen Suspension zerfällt und das im wesentlichen aus einer in Wasser unlöslichen Wirksubstanz, oberflächenaktiven Mitteln, Füllstoffen und Bindemitteln, Fliessreguliermitteln und einem Desintegrationsmittel besteht, das dadurch gekennzeichnet ist, dass es das Desintegrationsmittel in Form eines Brausegranulats enthält, das aus Kaliumcarbonat und/oder Kaliumhydrogencarbonat, einer festen wasserlöslichen sauren Substanz und einer zur Bindung von Wasser befähigten, in Wasser unlöslichen Substanz besteht.

Dieses Wirkstoffkonzentrat in Form von Brausetabletten wird gemäss vorliegender Erfindung hergestellt, indem man
a) 80-95 Gewichtsteilen einer aus einer festen wasserlöslichen sauren Substanz und Kaliumcarbonat und/oder Kaliumhydrogencarbonat bestehenden Mischung 5-20 Gewichtsteile einer zur Bindung von Wasser befähigten, in Wasser unlöslichen Substanz zusetzt, die erhaltene Mischung mit 25-50 Gewichtsteilen eines C₁-C₆-Alkanols zu einer Paste verrührt, anschliessend das Alkanol im Vakuum entfernt und den Rückstand granuliert,
b) die feingemahlene Wirksubstanz und die übrigen Hilfsstoffe, wie oberflächenaktive Mittel, Fliessreguliermittel, Schmiermittel, Füllstoffe und Bindemittel, miteinander vermischt und
c) das nach a) hergestellte Granulat und die nach b) hergestellte Pulvermischung miteinander vermischt und den so erhaltenen Feedstock tablettiert.

Die Tablettierung kann in üblichen Tablettierungsvorrichtungen durchgeführt werden. Tabletten mit guter mechanischer Festigkeit können mit Drucken von 500-800 kg/cm² hergestellt werden.

Die Herstellung des Brausegranulats nach Abschnitt (a) wurde oben bereits ausführlich geschrieben. Daher kann bezüglich der Einzelheiten für die Herstellung des Brausegranulats nach Abschnitt (a) auf die obigen Ausführungen verwiesen werden.

Zur Herstellung der Pulvermischung gemäss Abschnitt (b) geht man zweckmässig so vor, dass man den Wirkstoff und andere in wasserunlösliche Bestandteile zunächst auf eine Teilchengrösse im Bereich von 3-50 »m, vorzugsweise 5-15 »m mahlt und dann die übrigen Bestandteile, wie oberflächenaktive Mittel, Fliessreguliermittel, Schmiermittel, Füllstoffe und Bindemittel zumischt. Bei Wirkstoffen, die beim Mahlen zu Klumpenbildung neigen, wird vorteilhaft ein Anticaking-Mittel, beispielsweise hochdisperse Kieselsäure, zugesetzt. Die Menge des Anticaking-Mittels ist Jedoch so zu bemessen, dass sie weniger als 2 Gew.-%, vorzugsweise weniger als 1 Gew.-% der nach b) hergestellten Pulvermischung beträgt.

Im Verfahrensschritt c) werden die nach a) und b) hergestellten Vormischungen in einem konventionellen Mischer miteinander vermischt. Der so erhaltene Feedstock ist unmittelbar für die Tablettierung geeignet. Die Mischung ist jedoch aufgrund der guten Stabilität des Brausegranulats in geschlossenen Behältern praktisch unbegrenzt lagerfähig. Die Qualität der Mischung wird auch bei mehrstündigem Kontakt mit Luft mit einer relativen Feuchtigkeit von bis zu 40 % nicht nachteilig beeinflusst.

Als Wirksubstanzen, die in der erfindungsgemässen Brausetablette enthalten sein können, kommen allgemein Herbizide, Pflanzenwuchsregulatoren, Fungizide und Insektizide in Betracht, die in Wasser unlöslich sind. Besonders geeignet sind Wirksubstanzen, die eine hohe Aktivität besitzen und die in Aufwandmengen von weniger als 500 g/ha, vorzugsweise weniger als 150 g/ha zur Anwendung kommen. Die erfindungsgemässen Brausetabletten können 2-50 Gew.-% Wirksubstanz enthalten. Vorzugsweise enthalten die erfindungsgemässen Brausetabletten 5-25 Gew.-% Wirkstoff und besonders bevorzugt 7,5-15 Gew.-% Wirkstoff.

Die erfindungsgemässe Brausetablette kann auch flüssige Wirkstoffe enthalten, wenn diese an einem porösen Träger, wie z.B. Silicagel und hochdisperser Kieselsäure adsorbiert sind. In diesem Fall ist jedoch der Wirkstoffgehalt der Tablette bei höchstens 5 Gew.-%, da höhere Wirkstoffgehalte grössere Mengen an hochdisperser Kieselsäure als Träger erforderlich machen würden, die die mechanische Festigkeit der Tablette beeinträchtigen würden.

Als Klassen geeigneter Wirksubstanzen und geeignete Einzelverbindungen seien folgende genannt:
Phenoxyphenoxy- und Pyridyloxyphenoxypropionsäurederivate mit herbizider Wirkung, beispielsweise 2-[4-(5-Chlorpyrid-2-yloxy)-phenoxy]-propionsäure-n-butylester (Fluazifob-butyl) und 2-[4-(5-Chlor-3-fluorpyrid-2-yloxy)-phenoxy]-propionsäurepropargylester;
Sulfonylharnstoffe mit herbizider Wirkung, beispielsweise N-[2-(2-Chloräthoxy)-phenyl]-N′-(4-methoxy-6-methyl-1,3,5-triazin-2-yl)-harnstoff, N-[2-(2-Methoxyäthoxy)-phenyl-N′-(4,6-dimethoxy-1,3, 5-triazin-2-yl)harnstoff und N-(2-Methoxycarbonylphenyl)-N′-(4,6-bis-difluormethoxypyrimidin-2-yl)harnstoff;
1,3-Cyclohexandionderivate mit pflanzenwuchsregulierender Wirkung, beispielsweise 2-Cyclopropylcarbonyl-5-äthoxycarbonyl-1,3-cyclohexandion;
Benzoylharnstoffderivate mit insektizider Wirkung, wie N-Difluorbenzoyl-N′-(4-chlorphenyl)-harnstoff (Diflubenzuron), N-(2,6-Difluorbenzoyl)-N′-[2,5-dichlor-4-(2,2,3,5,5,5-hexafluorpropoxy)-phenyl]-harnstoff, ferner Harnstoffderivate mit insektizider Wirkung, wie N-(2,6-Diisopropylphenyl-4-phenoxyphenyl)-N′-tert.Butyl-harnstoff;
Pyrethroide mit insektizider Wirkung, wie α-Cyano-3-phenoxybenzyl-3-(2-chlor-3,3,3-trifluoropropenyl)-2,2-dimethylcyclopropancarboxylat (Cyhalotrin), insbesondere die (S)(Z)-(1R)-cis- und (R)(Z)-(1S)-cis-Isomeren, α-Cyano-3-phenoxybenzyl-3-(2,2,-dichlorvinyl)-2,2-dimethylcyclopropancarboxylat (Cypermethrin) insbesondere die S-1R-cis- und R-1S-cis-Isomeren, Deltamethrin; Melaminderivate mit insektizider Wirkung, beispielsweise N-Cyclopropyl-1,3,5-triazin-2,4,6-triamin-(Cyromazin);
5-Pyrimidinmethanolderivate mit fungizider Wirkung, wie α-(2-Chlorphenyl)-α-(4′-chlorphenyl)-5-pyrimidinmethanol (Fenarimol), α-(2-Chlorphenyl)-α-(4′-fluorphenyl)-5-pyrimidin (Nuarimol);
1-substituierte 1H-1,2,4-Triazolderivate, wie 1-(4-Chlorphenoxy)-3,3-dimethyl-1-(1H-1,2,4-triazol-1-yl)-2-butanon (Triadimefon), 1-(4-Chlorphenoxy)-3,3-dimethyl-1-(1H-1,2,4-triazol-1-yl)-butan-2-ol (Triadimenol), 1-[2-(2,4-Dichlorphenyl)-pentyl]-1H-1,2,4-triazol (Penconazol), 1-[2-(2,4-Dichlorhenyl)-4-propyl-1,3-dioxolan-2-ylmethyl]-1H-1,2,4-triazol (Propiconazol); ferner Harnstoffderivate mit fungizider Wirkung, beispielsweise 1-(2-Cyano-2-methoximinoacetyl)-3-äthyl-harnstoff (Cymoxanil), sowie Piperazinderivate mit fungizider Wirkung, beispielsweise 1,1′-Piperazin-1,4-diyldi-[N-(2,2,2-trichloräthyl)-formamid] (Triforin).

Als weitere geeignete Wirksubstanzen sind die unter den Common Names Diniconazol, Hexaconazol, Cyproconazol, Tebuconazol, Flusilazol, Myclobutanil, Pyrifenox bekannt gewordenen Fungizide zu nennen.

Als oberflächenaktive Mittel können nichtionische und ionische Substanzen verwendet werden. Als nichtionische oberflächenaktive Mittel kommen insbesondere äthoxylierte Alkohole, Fettsäuren und Phenole, sowie Polyätyhlenglykole und Aethylenoxid-Propylenoxid-Blockpolymere in Betracht, wobei äthoxylierte Phenole und Aethylenoxid-Propylenoxid-Blockpolymere je nach Konsistenz und Polymerisationsgrad auch als Schmiermittel wirken, die bei der Tablettierung das Herauslösen der Tabletten aus der Pressform erleichtern. Als ionische oberflächenaktive Mittel kommen insbesondere anionische Substanzen, wie Natrium-Laurylsulfat, Natrium-Dodecylbenzolsulfonat, polymere Sulfonsäuren, wie Ligninsulfonat, Kondensationsprodukte von Naphthalinsulfonsäure mit Formaldehyd und Kondensationsprodukte von Naphthalinsulfonsäure und Phenolsulfonsäure mit Formaldehyd in Frage, wobei diese Substanzen in erster Linie in Form ihrer Natriumsalze zur Anwendung kommen. Weiterhin können als anionische oberflächenaktive Substanzen Alkylphenolpolyglykolätherphosphate und -sulfate, sowie deren Alkali- und Aminsalze wie Natrium-, Kalium-, Triäthylamin-, Triäthanolamin- und Diäthanolaminsalze verwendet werden. Bevorzugte oberflächenaktive Mittel sind Alkylphenolpolyglykolätherphosphate und deren Alkali- und Aminsalze, sowie Natriumligninsulfonat und Kondensationsprodukte von aromatischen Sulfonsäuren mit Formaldehyd. Die erfindungsgemässe Brausetablette kann oberflächeaktive Mittel in Mengen von 2-20 Gew.-%, insbesondere 5-12 Gew.-% enthalten.

Ausser den vorgenannten als Schmiermittel verwendbaren oberflächenaktiven Mittel, wie Natrium-Laurylsulfat und Polyglykoläther, sind als Schmiermittel insbesondere Stearinsäure und ihre Salze, wie Kalzium-, Magnesium-und Aluminiumstearat, ferner Talkum (Magnesiumsilikat) und Natriumbenzoat geeignet. Der Gehalt der erfindungsgemässen Brausetablette an Schmiermittel kann 0,5-4 Gew.-% und insbesondere 0,5-2 Gew.-% betragen. Bevorzugte Schmiermittel sind Stearinsäure und deren Magnesium-, Kalzium- und Aluminiumsalz, deren Menge wegen ihrer stark hydrophobisierenden Wirkung 2 Gew.-% nicht überschreiten sollte. Ferner ist Natriumbenzoat ein besonders geeignetes wasserlösliches Schmiermittel.

Als geeignete Fliessreguliermittel sind neben hochdisperser Kieselsäure (pyrogene und gefällte Kieselsäure) amorphes Alumosilikat (Silica Alumina), kristalline Alumosilikate, insbesondere Zeolithe, und ferner Tonerde und Tone, wie Bentonit, Montmorillonit und Bauxit, zu nennen. Der Gehalt an Fliessreguliermittel kann zwischen 0 und 15 Gew.-% betragen. Die Verwendung von Fliessreguliermitteln hängt im wesentlichen von den Eigenschaften der Wirksubstanz ab. Empfehlenswert ist die Verwendung von Fliessreguliermitteln vor allem bei Wirksubstanzen, die beim Mahlen auf eine geeignete Teilchengrösse 3-50 »m zur Bildung von Klumpen neigen. Besonders geeignete Fliessreguliermittel sind gefällte und pyrogene Kieselsäuren. Da diese Substanzen gleichzeitig eine starke Anticaking-Wirkung haben, sollte ihr Gehalt in der nach Verfahrensschritt b) hergestellten Pulvermischung, die die Aktivsubstanz enthält, 2 Gew.-% nicht übersteigen, da ein höherer Gehalt an Fliessreguliermittel, insbesondere bei Verwendung von hochdisperser Kieselsäure, die mechanische Festigkeit der Brausetablette nachteilig beeinflusst. Aus diesem Grund liegt der Gehalt an hochdisperser Kieselsäure in der nach Verfahrensschritt b) hergestellten Pulvermischung vorzugsweise unter 1 Gew.-%.

Geeignete Füllstoffe und Bindemittel sind beispielsweise Polyglykoläther mit einem Molekulargewicht über 6000, lineares oder vernetztes Polyvinylpyrrolidon, Lactose, Stärke, Dextrin, Maltodextrin und Cellulosederivate. Der Gehalt der erfindungsgemässen Brausetablette an Füllstoffen und Bindemitteln kann 10-50, vorzugsweise 20-40 Gew.-% betragen. Ein besonders geeignetes Bindemittel ist sprühgetrocknete Lactose, die unter der Bezeichnung Tablettose® EP 6113 im Handel ist.

Mit dem erfindungsgemässen Brausegranulat wird es möglich, in Wasser unlösliche pestizide Wirkstoffe in ein festes wasser- und lösungsmittelfreies Konzentrat zu überführen, das in Wasser ausserordentlich rasch unter Bildung einer spritzfähigen Suspension zerfällt. Dabei ist von besonderem Vorteil, dass auch hydrophobe Wirksubstanzen als Brausetabletten formuliert werden können, die in Wasser rasch zu einer spritzfähigen Suspension zerfallen. Dies war aufgrund der Tatsache, dass solche hydrophoben Wirksubstanzen in der zur Bildung einer spritzfähigen Suspension erforderlichen geringen Teilchengrösse übliche, aus Natriumcarbonat und einer festen wasserlöslichen sauren Substanz bestehende Desintegrationsmittel passivieren, mit den bisher bekannten Methoden nicht möglich. Ferner ist von Vorteil, dass mit vorliegender Erfindung problemlos auch sehr grosse Brausetabletten mit einem Durchmesser von 70-100 mm hergestellt werden können, die trotz ihrer Grösse in Wasser in 2-3 Minuten zerfallen. Derart grosse Brausetabletten erleichtern die Dosierung des Wirkstoffs erheblich, da die für einen Spraytank erforderliche Menge an Wirkstoff in einer einzigen oder in einigen wenigen Brausetabletten enthalten ist.

Die Herstellung des erfindungsgemässen Brausegranulats und seine Verwendung zur Herstellung von Brausetabletten wird durch die folgenden Beispiele näher erläutert.

### Beispiel 1: Herstellung des Brausegranulats

a) 3,459 kg wasserfreie Zitronensäure und 3,459 kg wasserfreies Kaliumcarbonat werden in Pulverform mit 0,441 kg Sipernat® 50S (hochdisperse Kieselsäure mit einer mittleren Agglomeratgrösse von 8 »m und einer Oberfläche nach BET von 450 m²/g) vermischt. Die erhaltene Pulvermischung wird mit 2,8 l Isopropanol zu einer Paste verrührt. Diese wird dann zur vollständigen Entfernung des Isopropanols 1 Std. bei 60°C und einem Druck von 20-30 mbar getrocknet und der Rückstand auf eine Teilchengrösse von 0,8 mm gemahlen. Das so erhaltene Granulat kann ohne weitere Behandlung direkt zur Herstellung von Brausetabletten verwendet werden.
b) 4,70 kg wasserfreie Adipinsäure und 4,70 kg wasserfreies Kaliumcarbonat werden in Pulverform mit 0,60 kg Sipernat® 50S (hochdisperse Kieselsäure mit einer mittleren Agglomeratgrösse von 8 »m und einer Oberfläche nach BET von 450 m²/g) vermischt. Die erhaltene Pulvermischung wird mit 2,7 l Isopropanol zu einer Paste verrührt. Diese wird dann zur vollständigen Entfernung des Isopropanols 1 Std. bei 60°C und einem Druck von 20-30 mbar getrocknet und der Rückstand auf eine Teilchengrösse von 0,8 mm gemahlen. Das so erhaltene Gemisch kann ohne weitere Behandlung direkt zur Herstellung von Brausetabletten verwendet werden.
c) 3,459 kg wasserfreie Zitronensäure und 3,459 kg wasserfreies Kaliumcarbonat werden in Pulverform mit 0,441 kg Sipernat® 50S (hochdisperse Kieselsäure mit einer mittleren Agglomeratgrösse von 8 »m und einer Oberfläche nach BET von 450 m²/g) vermischt. Die erhaltene Pulvermischung wird mit 2,8 l Isobutanol zu einer Paste verrührt. Diese wird dann zur vollständigen Entfernung des Isobutanols 1 Std. bei 60°C und einem Druck von 20-30 mbar getrocknet und der Rückstand auf eine Teilchengrösse von 0,8 mm gemahlen. Das so erhaltene Granulat kann ohne weitere Behandlung direkt zur Herstellung von Brausetabletten verwendet werden.

### Beispiel 2: Herstellung von Brausetabletten

0,92 kg 1-[2-(2,4-Dichlorphenyl)-pentyl]-1H-1,2,4-triazol (Penconazol) und 0,08 kg Sipernat® 50S werden vermischt und in einer Strahl-Mühle auf eine mittlere Teilchengrösse 8-10 »m gemahlen. Es wird ein gut fliessfähiges Pulver erhalten, dass keine Neigung zum Zusammenbacken zeigt. Zur Herstellung eines direkt zur Tablettierung geeigneten Feedstocks wird die feingemahlen Aktivsubstanz mit einer homogenen Pulvermischung von 0,981 kg Dispergator (Kondensationsprodukt von Naphthalinsulfonsäure, Phenolsulfonsäure und Formaldehyd) 0,245 kg Na-Laurylsulfat, 0,184 kg Na-Benzoat, 0,061 kg Mg-Stearat, 2,435 kg Lactose (Tablettose® EP 6113) und 7,36 kg des nach Beispiel 1 hergestellten Brausegranulats homogen vermischt. Man erhält auf diese Weise einen Feedstock von folgender Zusammensetzung:
7,50 Gew.-% Penconazol
4,25 Gew.-% Sipernat® 50S
8,00 Gew.-% Dispergator
2,00 Gew.-% Na-Laurylsulfat
1,50 Gew.-% Na-Benzoat
0,50 Gew.-% Mg-Stearat
28,20 Gew.-% Zitronensäure
28,20 Gew.-% Kaliumcarbonat
19,85 Gew.-% Lactose.

Der gut fliessfähige Feedstock wird dann in einer konventionellen Tablettierungsmaschine unter einem Druck 600 kg/cm² zu Tabletten mit einem Durchmesser von 76 mm, einer Dicke von 9 mm und einem Gewicht von 50 g verpresst. Die Tabletten besitzen gute mechanische Festigkeit. Die Zerfallszeit in Wasser beträgt 2-3 Minuten. Die erhaltene Suspension ist ohne weitere Behandlung direkt spritzfähig.

## Patentansprüche

1. Brausegranulat, dadurch gekennzeichnet, dass es neben einer festen wasserlöslichen sauren Substanz und Kaliumcarbonat und/oder Kaliumhydrogencarbonat 5-20 Gew.-% einer fein verteilten, zur Bindung von Wasser befähigten, in Wasser unlöslichen Substanz enthält.

2. Brausegranulat nach Anspruch 1, dadurch gekennzeichnet, dass es als feste wasserlösliche saure Substanz eine mehrbasische Säure oder ein saures Salz einer mehrbasischen Säure enthält.

3. Brausegranulat nach Anspruch 2, dadurch gekennzeichnet, dass es als feste wasserlösliche saure Substanz eine mehrbasische Carbonsäure oder ein saures Salz einer mehrbasischen Carbonsäure enthält.

4. Brausegranulat nach Anspruch 3, dadurch gekennzeichnet, dass es als feste wasserlösliche saure Substanz Bernsteinsäure, Weinsäure, Adipinsäure, Zitronensäure oder ein saures Salz einer dieser Säuren enthält.

5. Brausegranulat nach Anspruch 4, dadurch gekennzeichnet, dass es als feste wasserlösliche saure Substanz Zitronensäure oder ein saures Salz der Zitronensäure enthält.

6. Brausegranulat nach Anspruch 1, dadurch gekennzeichnet, dass es pro Aequivalent Kaliumcarbonat und/oder Kaliumhydrogencarbonat 0.5-1.5 Aequivalente einer festen wasserlöslichen sauren Substanz enthält.

7. Brausegranulat nach Anspruch 6, dadurch gekennzeichnet, dass es pro Aequivalent Kaliumcarbonat und/oder Kaliumhydrogencarbonat 0.8-1.2 Aequivalente einer festen wasserlöslichen sauren Substanz enthält.

8. Brausegranulat nach Anspruch 7, dadurch gekennzeichnet, dass es pro Aequivalent Kaliumcarbonat und/oder Kaliumhydrogencarbonat 1.0-1.2 Aequivalente einer festen wasserlöslichen sauren Substanz enthält.

9. Brausegranulat nach Anspruch 1, dadurch gekennzeichnet, dass es als zur Bindung von Wasser befähigte, in Wasser unlösliche Substanz hochdisperse Kieselsäure, amorphes oder kristallines Alumosilikat, Aluminiumoxid, ein Tonmineral oder ein Gemisch solcher Substanzen enthält.

10. Brausegranulat nach Anspruch 9, dadurch gekennzeichnet, dass es als hochdisperse Kieselsäure gefällte oder pyrogene Kieselsäure enthält.

11. Brausegranulat nach Anspruch 10, dadurch gekennzeichnet, dass es gefällte oder pyrogene Kieselsäure mit einer Agglomeratgrösse von 5-50 »m und einer Obefläche gemessen nach BET von 200-500 m²/g enthält.

12. Brausegranulat nach Anspruch 9, dadurch gekennzeichnet, dass es als zur Bindung von Wasser befähigte, in Wasser unlösliche Substanz ein amorphes Alumosilikat mit einem Gehalt von 5-30 Gew.-% Al₂O₃ und 70-95 Gew.-% SiO₂, einer inneren Oberfläche gemessen nach BET von 50-800 m²/g, einem Porenvolumen von 0,1-3 cm³/g und einer Teilchengrösse von 8-25 »m enthält.

13. Brausegranulat nach Anspruch 9, dadurch gekennzeichnet, dass es als kristallines Alumosilikat einen natürlichen oder synthetischen Zeolith mit einer Teilchengrösse von 8-25 »m enthält.

14. Brausegranulat nach Anspruch 9, dadurch gekennzeichnet, dass es ein zur Säulenchromatographie geeignetes Aluminiumoxid enthält.

15. Brausegranulat nach Anspruch 9, dadurch gekennzeichnet, dass es als Tonmineral Bentonit, Montmorillonit oder Bauxit enthält

16. Brausegranulat nach Anspruch 1, dadurch gekennzeichnet, dass die zur Bindung von Wasser befähigte, in Wasser unlösliche Substanz weniger als 5 Gew.-% Wasser enthält.

17. Brausegranulat nach Anspruch 16, dadurch gekennzeichnet, dass die zur Bindung von Wasser befähigte, in Wasser unlösliche Substanz weniger als 3 Gew.-% Wasser enthält.

18. Brausegranulat nach Anspruch 1, dadurch gekennzeichnet, dass es 5-10 Gew.-% einer feinverteilten, zur Bindung von Wasser befähigten, in Wasser unlöslichen Substanz enthält.

19. Brausegranulat nach Anspruch 1, dadurch gekennzeichnet, dass die Korngrösse bis zu 1 mm beträgt.

20. Verfahren zur Herstellung des Brausegranulats gemäss Ansprüchen 1-19, dadurch gekennzeichnet, dass man 80-95 Gew.-% einer im wesentlichen aus äquivalenten Mengen einer festen wasserlöslichen sauren Substanz und Kaliumcarbonat und/oder Kaliumhydrogencarbonat bestehenden Mischung 5-20 Gew.-% einer feinverteilten, zur Bindung von Wasser befähigten, in Wasser unlöslichen Substanz zusetzt, die erhaltene Mischung mit 25-50 Gew.-% eines C₁-C₆-Alkanols zu einer Paste verrührt, anschliessend das Alkanol im Vakuum entfernt und den Rückstand granuliert.

21. Verfahren nach Anspruch 20, dadurch gekennzeichnet, dass man ein C₃-C₄-Alkanol verwendet.

22. Verfahren nach Anspruch 21, dadurch gekennzeichnet, dass man Isopropanol oder Isobutanol verwendet.

23. Verfahren nach Anspruch 20, dadurch gekennzeichnet, dass man 30-40 Gew.-% eines C₁-C₆-Alkanols verwendet.

24. Verfahren nach Anspruch 20, dadurch gekennzeichnet, dass man das Alkanol bei einem Druck von 0,02-0,1 bar und einer Temperatur von 40-80°C entfernt.

25. Verfahren nach Anspruch 24, dadurch gekennzeichnet, dass man das Alkanol bei einem Druck von 0,02-0,05 bar und einer Temperatur von 50-70°C entfernt.

26. Verfahren nach Anspruch 20, dadurch gekennzeichnet, dass man den nach Entfernung des Alkanols erhaltenen Rückstand mahlt und durch ein Sieb mit einer Maschenweite von 0.5-1 mm siebt.

27. Pestizides Wirkstoffkonzentrat in Form von Brausetabletten, das in Wasser unter Bildung einer spritzfähigen Suspension zerfällt und das im wesentlichen aus einer in Wasser unlöslichen Wirksubstanz, oberflächenaktiven Mitteln, Füllstoff- und Bindemitteln, Fliessreguliermitteln und einem Desintegrationsmittel besteht, dadurch gekennzeichnet, dass es das Desintegrationsmittel in Form eines Brausegranulats enthält, das aus Kaliumcarbonat und/oder Kaliumhydrogencarbonat, einer festen wasserlöslichen sauren Substanz und einer feinverteilten, zur Bindung von Wasser befähigten, in Wasser unlöslichen Substanz besteht.

28. Pestizides Wirkstoffkonzentrat nach Anspruch 27, dadurch gekennzeichnet, dass das Brausegranulat neben einer festen wasserlöslichen sauren Substanz und Kaliumcarbonat und/oder Kaliumhydrogencarbonat 5-20 Gew.-% hochdisperse Kieselsäure enthält.

29. Pestizides Wirkstoffkonzentrat nach Anspruch 27, dadurch gekennzeichnet, dass es ein Brausegranulat nach einem der Ansprüche 1-12 enthält.

30. Pestizides Wirkstoffkonzentrat nach Anspruch 27, dadurch gekennzeichnet, dass es als Wirkstoff ein Herbizid, ein Fungizid, ein Insektizid oder eine den Pflanzenwuchs regulierende Substanz enthält.

31. Pestizides Wirkstoffkonzentrat nach Anspruch 30, dadurch gekennzeichnet, dass es eine hochaktive Wirksubstanz enthält, die in Aufwandmengen von weniger als 150 g/ha zur Anwendung kommt.

32. Pestizides Wirkstoffkonzentrat nach Anspruch 27, dadurch gekennzeichnet, dass es 2-50 Gew.-% Wirksubstanz enthält.

33. Pestizides Wirkstoffkonzentrat nach Anspruch 32, dadurch gekennzeichnet, dass es 5-25 Gew.-% Wirkstoff enthält.

34. Pestizides Wirkstoffkonzentrat nach Anspruch 33, dadurch gekennzeichnet, dass es 7,5-15 Gew.-% Wirkstoff enthält.

35. Pestizides Wirkstoffkonzentrat nach Anspruch 27, dadurch gekennzeichnet, dass es als Wirkstoff 1-[2-(2,4-Dichlorphenyl)-pentyl]-1H-1,2,4-triazol (Penconazol) enthält.

36. Verfahren zur Herstellung des Wirkstoffkonzentrats gemäss Ansprüchen 27-35, dadurch gekennzeichnet, dass man
a) 80-95 Gewichtsteilen einer aus einer festen wasserlöslichen sauren Substanz und Kaliumcarbonat und/oder Kaliumhydrogencarbonat bestehenden Mischung 5-20 Gewichtsteile einer feinverteilten, zur Bindung von Wasser befähigten, in Wasser unlöslichen Substanz zusetzt, die erhaltene Mischung mit 25-50 Gewichtsteilen eines C₁-C₆-Alkanols zu einer Paste verrührt, anschliessend das Alkanol im Vakuum entfernt und den Rückstand granuliert,
b) die feingemahlene Wirksubstanz und die übrigen Hilfsstoffe, wie oberflächenaktive Mittel, Fliessreguliermittel, Schmiermittel, Füllstoffe und Bindemittel, miteinander vermischt und
c) das nach a) hergestellte Granulat und die nach b) hergestellte Pulvermischung miteinander vermischt und den so erhaltenen Feedstock tablettiert.

## Claims

1. An effervescent granulate, which comprises, in addition to a solid water-soluble acidic substance and potassium carbonate and/or potassium hydrogen carbonate, from 5 to 20 % by weight of a finely divided water-insoluble substance that is capable of binding water.

2. An effervescent granulate according to claim 1, which comprises as solid water-soluble acidic substance a polybasic acid or an acid salt of a polybasic acid.

3. An effervescent granulate according to claim 2, which comprises as solid water-soluble acidic substance a polybasic carboxylic acid or an acid salt of a polybasic carboxylic acid.

4. An effervescent granulate according to claim 3, which comprises as solid water-soluble acidic substance succinic acid, tartaric acid, adipic acid, citric acid or an acid salt of one of those acids.

5. An effervescent granulate according to claim 4, which comprises as solid water-soluble acidic substance citric acid or an acid salt of citric acid.

6. An effervescent granulate according to claim 1, which comprises from 0.5 to 1.5 equivalents of a solid water-soluble acidic substance per equivalent of potassium carbonate and/or potassium hydrogen carbonate.

7. An effervescent granulate according to claim 6, which comprises from 0.8 to 1.2 equivalents of a solid water-soluble acidic substance per equivalent of potassium carbonate and/or potassium hydrogen carbonate.

8. An effervescent granulate according to claim 7, which comprises from 1.0 to 1.2 equivalents of a solid water-soluble acidic substance per equivalent of potassium carbonate and/or potassium hydrogen carbonate.

9. An effervescent granulate according to claim 1, which comprises as water-insoluble substance capable of binding water highly dispersed silicic acid, amorphous or crystalline aluminosilicate, aluminium oxide, a clay mineral or a mixture of such substances.

10. An effervescent granulate according to claim 9, which comprises as highly dispersed silicic acid precipitated or pyrogenic silicic acid.

11. An effervescent granulate according to claim 10, which comprises precipitated or pyrogenic silicic acid having an agglomerate size of from 5 to 50 »m and a surface area, measured according to BET, of from 200 to 500 m²/g.

12. An effervescent granulate according to claim 9, which comprises as water-insoluble substance capable of binding water an amorphous aluminosilicate comprising from 5 to 30 % by weight of Al₂O₃ and from 70 to 95 % by weight of SiO₂ and having an inner surface area, measured according to BET, of from 50 to 800 m²/g, a pore volume of from 0.1 to 3 cm³/g and a particle size of from 8 to 25 »m.

13. An effervescent granulate according to claim 9, which comprises as crystalline aluminosilicate a natural or synthetic zeolite having a particle size of from 8 to 25 »m.

14. An effervescent granulate according to claim 9, which comprises an aluminium oxide suitable for column chromatography.

15. An effervescent granulate according to claim 9, which comprises as clay mineral bentonite, montmorillonite or bauxite.

16. An effervescent granulate according to claim 1, wherein the water-insoluble substance capable of binding water comprises less than 5 % by weight of water.

17. An effervescent granulate according to claim 16, wherein the water-insoluble substance capable of binding water comprises less than 3 % by weight of water.

18. An effervescent granulate according to claim 1, which comprises from 5 to 10 % by weight of a finely divided water-insoluble substance capable of binding water.

19. An effervescent granulate according to claim 1, wherein the grain size is up to 1 mm.

20. A process for the preparation of the effervescent granulate according to claims 1 to 19, which comprises adding from 5 to 20 % by weight of a finely divided water-insoluble substance capable of binding water to from 80 to 95 % by weight of a mixture consisting essentially of equivalent amounts of a solid water-soluble acidic substance and potassium carbonate and/or potassium hydrogen carbonate, stirring the resulting mixture with from 25 to 50 % by weight of a C₁-C₆alkanol to form a paste, and then removing the alkanol in vacuo and granulating the residue.

21. A process according to claim 20, wherein a C₃-C₄-alkanol is used.

22. A process according to claim 21, wherein isopropanol or isobutanol is used.

23. A process according to claim 20, wherein from 30 to 40 % by weight of a C₁-C₆alkanol are used.

24. A process according to claim 20, wherein the alkanol is removed under a pressure of from 0.02 to 0.1 bar and at a temperature of from 40 to 80°C.

25. A process according to claim 24, wherein the alkanol is removed under a pressure of from 0.02 to 0.05 bar and at a temperature of from 50 to 70°C.

26. A process according to claim 20, which comprises grinding the residue obtained after removal of the alkanol and passing it through a sieve having a mesh size of from 0.5 to 1 mm.

27. A pesticidal active ingredient concentrate in the form of effervescent tablets, which disintegrates in water to form a sprayable suspension and consists essentially of a water-insoluble active ingredient, surface-active agents, fillers and binders, flow regulators and a disintegrator, which concentrate comprises the disintegrator in the form of an effervescent granulate comprising potassium carbonate and/or potassium hydrogen carbonate, a solid water-soluble acidic substance and a finely divided water-insoluble substance that is capable of binding water.

28. A pesticidal active ingredient concentrate according to claim 27, wherein the effervescent granulate comprises, in addition to a solid water-soluble acidic substance and potassium carbonate and/or potassium hydrogen carbonate, from 5 to 20 % by weight of highly dispersed silicic acid.

29. A pesticidal active ingredient concentrate according to claim 27, which comprises an effervescent granulate according to any one of claims 1 to 12.

30. A pesticidal active ingredient concentrate according to claim 27, which comprises as active ingredient a herbicide, a fungicide, an insecticide or a plant-growth-regulating substance.

31. A pesticidal active ingredient concentrate according to claim 30, which comprises a highly potent active ingredient that is used at application rates of less than 150 g/ha.

32. A pesticidal active ingredient concentrate according to claim 27, which comprises from 2 to 50 % by weight of active ingredient.

33. A pesticidal active ingredient concentrate according to claim 32, which comprises from 5 to 25 % by weight of active ingredient.

34. A pesticidal active ingredient concentrate according to claim 33, which comprises from 7.5 to 15 % by weight of active ingredient.

35. A pesticidal active ingredient concentrate according to claim 27, which comprises as active ingredient 1-[2-(2,4-dichlorophenyl)-pentyl]-1H-1,2,4-triazole (penconazole).

36. A process for the preparation of the active ingredient concentrate according to claims 27 to 35, which comprises
a) adding from 5 to 20 parts by weight of a finely divided water-insoluble substance capable of binding water to from 80 to 95 parts by weight of a mixture comprising a solid water-soluble acidic substance and potassium carbonate and/or potassium hydrogen carbonate, stirring the resulting mixture with from 25 to 50 parts by weight of a C₁-C₆alkanol to form a paste, and then removing the alkanol in vacuo and granulating the residue,
b) mixing together the finely ground active ingredient and the other adjuvants, such as surface-active agents, flow regulators, lubricants, fillers and binders, and
c) mixing together the granulate prepared under a) and the powder mixture prepared under b) and forming the resulting feedstock into tablets.

## Revendications

1. Granulé d'arrosage, caractérisé en ce que celui-ci, en plus d'une substance acide solide soluble dans l'eau et de carbonate de potassium et/ou de bicarbonate de potassium, comporte de 5 à 20 % en poids d'une substance finement divisée, rendue apte par l'eau à se lier et insoluble dans l'eau.

2. Granulé d'arrosage selon la revendication 1, caractérisé en ce qu'il comporte, comme substance acide solide soluble dans l'eau, un acide polybasique ou un sel acide d'un acide polybasique.

3. Granulé d'arrosage selon la revendication 2, caractérisé en ce qu'il comporte, comme substance acide solide soluble dans l'eau, un acide carboxylique polybasique ou un sel acide d'un acide carboxylique polybasique.

4. Granulé d'arrosage selon la revendication 3, caractérisé en ce qu'il comporte, comme substance acide solide soluble dans l'eau, de l'acide succinique, de l'acide tartrique, de l'acide adipique, de l'acide citrique, ou un sel acide d'un de ces acides.

5. Granulé d'arrosage selon la revendication 4, caractérisé en ce qu'il comporte, comme substance acide solide soluble dans l'eau, de l'acide citrique ou un sel acide de l'acide citrique.

6. Granulé d'arrosage selon la revendication 1, caractérisé en ce qu'il comporte de 0,5 à 1,5 équivalents d'une substance acide solide soluble dans l'eau, par équivalent de carbonate de potassium et/ou de bicarbonate de potassium.

7. Granulé d'arrosage selon la revendication 6, caractérisé en ce qu'il comporte de 0,8 à 1,2 équivalents d'une substance acide solide soluble dans l'eau, par équivalent de carbonate de potassium et/ou de bicarbonate de potassium.

8. Granulé d'arrosage selon la revendication 7, caractérisé en ce qu'il comporte de 1,0 à 1,2 équivalents d'une substance acide solide soluble dans l'eau, par équivalent de carbonate dé potassium et/ou de bicarbonate de potassium.

9. Granulé d'arrosage selon la revendication 1, caractérisé en ce qu'il comporte, comme substance insoluble dans l'eau, rendue apte par l'eau à se lier, de l'acide silicique très dispersé, un aluminosilicate amorphe ou cristallin, de l'oxyde d'aluminium, un minéral d'argile, très dispersés, ou un mélange de telles substances.

10. Granulé d'arrosage selon la revendication 9, caractérisé en ce qu'il comporte, comme acide silicique très dispersé, de l'acide silicique obtenu par précipitation ou par pyrogénation.

11. Granulé d'arrosage selon la revendication 10, caractérisé en ce qu'il comporte un acide silicique obtenu par précipitation ou pyrogénation qui a une dimension d'agglomérats de 5 à 50 »m et une surface, mesurée selon BET, de 200 à 500 m²/g.

12. Granulé d'arrosage selon la revendication 9, caractérisé en ce qu'il comporte, comme substance insoluble dans l'eau, rendue apte par l'eau à se lier,un aluminosilicate amorphe ayant une teneur de 5 à 30 % en poids de Al₂O₃ et de 70 à 95 % en poids de SiO₂, une surface interne, mesurée selon BET, de 50 à 800 m²/g, un volume des pores de 0,1 à 3 cm³/g et une dimension des particules de 8 à 25 »m.

13. Granulé d'arrosage selon la revendication 9, caractérisé en ce qu'il comporte, comme aluminosilicate cristallin, une zéolithe naturelle ou synthétique, ayant une dimension des particules de 8 à 25 »m.

14. Granulé d'arrosage selon la revendication 9, caractérisé en ce qu'il comporte un oxyde d'aluminium approprié pour une chromatographie sur colonne.

15. Granulé d'arrosage selon la revendication 9, caractérisé en ce qu'il comporte, comme minéral d'argile, de la bentonite, de la montmorillonite ou de la bauxite.

16. Granulé d'arrosage selon la revendication 1, caractérisé en ce que la substance insoluble dans l'eau et rendue apte par l'eau à se lier comporte moins de 5 % en poids d'eau.

17. Granulé d'arrosage selon la revendication 16, caractérisé en ce que la substance insoluble dans l'eau et rendue apte par l'eau à se lier comporte moins de 3 % en poids d'eau.

18. Granulé d'arrosage selon la revendication 1, caractérisé en ce qu'il comporte de 5 à 10 % en poids d'une substance finement divisée, insoluble dans l'eau et rendue apte par l'eau à se lier.

19. Granulé d'arrosage selon la revendication 1, caractérisé en ce que la dimension des grains va jusqu'à 1 mm.

20. Procédé pour préparer le granulé d'arrosage conforme aux revendications 1 à 19, caractérisé par les points suivants : à 80-95 % en poids d'un mélange constitué essentiellement de quantités équivalentes d'une substance acide solide soluble dans l'eau et de carbonate de potassium et/ou de bicarbonate de potassium, on ajoute de 5 à 20 % en poids d'une substance insoluble dans l'eau, rendue apte par l'eau à se lier, et finement divisée, on délaie le mélange obtenu avec de 25 à 50 % en poids d'un alcanol en C₁-C₆ pour obtenir une pâte, puis on élimine sous vide l'alcanol et on granule le résidu.

21. Procédé selon la revendication 20, caractérisé en ce que l'on utilise un alcanol en C₃-C₄.

22. Procédé selon la revendication 21, caractérisé en ce que l'on utilise de l'isopropanol ou de l'isobutanol.

23. Procédé selon la revendication 20, caractérisé en ce que l'on utilise de 30 à 40 % en poids d'un alcanol en C₁-C₆.

24. Procédé selon la revendication 20, caractérisé en ce que l'on élimine l'alcanol à une pression de 0,02 à 0,1 bar et à une température de 40 à 80°C.

25. Procédé selon la revendication 24, caractérisé en ce que l'on élimine l'alcanol à une pression de 0,02 à 0,05 bar et à une température de 50 à 70°C.

26. Procédé selon la revendication 20, caractérisé en ce que l'on broie le résidu obtenu après l'élimination de l'alcanol et en ce qu'on le tamise à travers un tamis ayant une largeur des mailles de 0,5 à 1 mm.

27. Concentré pesticide de matière active sous forme de tablettes d'arrosage, qui se dissocie dans l'eau en formant une suspension pouvant être pulvérisée et qui est constitué essentiellement d'une substance active insoluble dans l'eau, d'agents tensioactifs, de charges, de liants et d'agents pour régler l'écoulement et d'un agent de désintégration, le concentré étant caractérisé en ce qu'il comporte l'agent de désintégration sous forme d'un granulé d'arrosage, qui est constitué de carbonate de potassium et/ou de bicarbonate de potassium, d'une substance acide solide, soluble dans l'eau et d'une substance finement divisée, insoluble dans l'eau, rendue apte par l'eau à se lier.

28. Concentré pesticide de matière active selon la revendication 27, caractérisé en ce que le granulé d'arrosage, en plus d'une substance acide solide soluble dans l'eau et de carbonate de potassium et/ou de bicarbonate de potassium, comporte de 5 à 20 % en poids d'acide silicique très dispersé.

29. Concentré pesticide de matière active selon la revendication 27, caractérisé en ce qu'il comporte un granulé d'arrosage selon une des revendications 1 à 12.

30. Concentré pesticide de matière active selon la revendication 27, caractérisé en ce qu'il comporte comme matière active un herbicide, un fongicide, un insecticide ou une substance régulant la croissance des plantes.

31. Concentré pesticide de matière active selon la revendication 30, caractérisé en ce qu'il comporte une substance très active qui peut être utilisée dans des quantités inférieures à 150 g/ha.

32. Concentré pesticide de matière active selon la revendication 27, caractérisé en ce qu'il comporte de 2 à 50 % en poids de matière active.

33. Concentré pesticide de matière active selon la revendication 32, caractérisé en ce qu'il comporte de 5 à 25 % en poids de matière active.

34. Concentré pesticide de matière active selon la revendication 33, caractérisé en ce qu'il comporte de 7,5 à 15 % en poids de matière active.

35. Concentré pesticide de matière active selon la revendication 27, caractérisé en ce qu'il comporte comme matière active du 1-[2-(2,4-dichlorophényl)-pentyl]-1H-1,2,4-triazole (penconazol).

36. Procédé pour préparer le concentré de matière active selon les revendications 27 à 35, caractérisé par les points suivants:
a) à 80-95 parties en poids d'un mélange constitué d'une substance acide solide soluble dans l'eau et de carbonate de potassium et/ou de bicarbonate de potassium, on ajoute de 5 à 20 parties en poids d'une substance finement divisée, insoluble dans l'eau et rendue apte par l'eau à se lier, on délaie le mélange obtenu avec de 25 à 50 parties en poids d'un alcanol en C₁-C₆ pour obtenir une pâte, puis on élimine sous vide l'alcanol et on granule le résidu,
b) on mélange la substance active finement broyée et les additifs habituels, comme des agents tensio-actifs, des agents pour réguler l'écoulement, des lubrifiants, des charges et des liants, et
c) le granulé obtenu selon a) et le mélange en poudre obtenu selon b) sont mélangés ensemble et on prépare des tablettes avec la charge d'alimentation ainsi obtenue.
